# EUROPEAN PATENT APPLICATION

(11) **EP 4 821 673 A1**
(43) Date of publication of application: **14.10.2026**
(21) Application number: 25170132.2
(22) Date of filing: 11.04.2025
(51) Int. Cl.: B32B 3/28, B32B 5/18, B32B 23/00, B32B 23/06, B32B 29/00

(54) **PROTECTIVE PACKAGING PRODUCT, METHOD FOR ITS MANUFACTURE, AND STOCK MATERIAL FOR PROVIDING A PROTECTIVE PACKAGING PRODUCT**

(71) Applicant: Storopack Hans Reichenecker GmbH, 72555 Metzingen (DE)
(72) Inventor: MAHE, Anthony, 44860 Pont-Saint-Martin (FR); VOISIN, Julien, 44521 Oudon (FR)
(74) Representative: DREISS Patentanwälte PartG mbB

(57) **Abstract**

A protective packaging product (10) comprises a plurality (11) of stacked layers (12), the layers (12) being corrugated layers (12) having a multitude of corrugations (14) and comprising a foamed polysaccharide material, the layers (12) being parallel to each other and being adhered to an adjacent layer (12) at a multitude of locations, essentially all corrugations (14) of the corrugated layers (12) being essentially parallel to each other. The protective packaging product (10) in a use state comprises at least one bend, a bending axis of the bend being parallel to the corrugations (14).

## Description

The present invention relates to a protective packaging product, a method for its manufacture, and a stock material for providing a protective packaging product according to the preambles of independent claims.

It is known from the market to manufacture specifically shaped protective packaging products by stacking polyethylene layers one above the other, and by fixing the polyethylene layers to each other by heat welding. Such protective packaging products are used to receive an object in order to protect this object for example against shock loads during transport. Such objects may be TV screens and other fragile objects. WO 2022/171715 A1 discloses a protective packaging product comprising a plurality of corrugated and stacked layers, at least some layers comprising a foamed polysaccharide material, and at least some layers being adhered to an adjacent layer. US 6,083,586 A also discloses corrugated sheets having a starch based binding matrix.

It is an object of the present invention to provide a protective packaging product having good protection and good environmental characteristics.

This object is achieved by means of a protective packaging products, a method for its manufacture and a stock material for providing such a product having the features of the respective independent claims. Further embodiments are given in the dependent claims.

The invention has the advantage of providing a protective packaging product that is easy to manufacture and that can be used very flexibly. Furthermore, little or no waste is produced during its manufacture. This is possible because it can be made from a given web-like material that has a fixed width, while pieces of material that have a desired length are cut from it. The protective packaging product can be used both to wrap an object to be protected and to fill a cavity in a shipping container. This is made possible by the fact that the protective packaging product has at least one bend.

Specifically, a protective packaging product is proposed comprising a plurality of stacked layers, the layers being parallel to each other and being adhered to an adjacent layer at a multitude of locations, e.g. by an adhesive. The layers have a thickness which is typically considerably smaller than a width extension of the protective packaging product. By way of example, a thickness of the non-corrugated material is in the range of approximately 2-3 mm. Moreover, a thickness of a single corrugated layer is typically in the range of approximately 5-10 mm, more preferably in the range of 7 mm, and a thickness of 4 stacked layers is in the range of 25-35mm, preferably approximately 30 mm. By way of example, a single corrugated layer may have approximately 10-20 corrugations per 10 cm, preferably approx. 15 corrugations per 10 cm, seen in a direction transverse to the corrugations. It is preferred that the plurality of stacked corrugated layers is formed by approximately 4 layers.

The layers of the protective packaging product are corrugated or undulated layers, respectively. Essentially all corrugations of all corrugated layers are essentially parallel to each other. This means that each layer as a whole has, seen from a side, a multitude of zigzag- or meander-like corrugations or waves, respectively. The corrugation axes of these corrugations are all oriented in the same direction. The layers comprise a foamed polysaccharide material, which might e.g. be provided by an extrusion process. The adhesive which fixes adjacent layers together is preferable also of a polysaccharide material. The adhesive may be created simply by moisturizing a surface of a layer, e.g. by applying (spraying) water, the surface facing to another layer.

According to the invention, the protective packaging product in its use state comprises at least one bend, a bending axis of the bend being parallel to the corrugations. This means that the stack of corrugated layers as a whole makes a more or less sharp bend at least at one location. The necessary elasticity is at least partially provided by the corrugations, but it may also be that at the location of the bend one or more of the layers, e.g. the one or more layers on the outside of the bend, locally and/or partially break. The bend of the protective packaging product can be used either to wrap the protective packaging product around an object to be protected, or to shape the protective packaging product such that it essentially and partially complies with a shape of an inner volume of a shipping container, or to form a void fill product which can be elastically squeezed into a void between an object and an interior wall of a shipping container or an adjacent object, or the like.

In a further embodiment, the polysaccharide material comprises at least one material of the following group: cellulose, starch, lignin, pullulanes, alginates, chitin, chitosanes, natural rubbers, rosinic acid, dextrin or proteins such as gluten, zein, casein, collagen, gelatin, phospholipids, caseins and their derivatives such as for example esters or ethers. These types of materials are particularly well-suited for manufacturing the protective packaging product. Among these materials, starch is particularly preferred.

In a further embodiment, the protective packaging product comprises an outer sheath preferably made of paper, the plurality of stacked layers forming a plate-like insert and being as a whole disposed inside the sheath. The protective packaging product is thus embodied as a flat and typically rectangular plate. The protective packaging product thus has a relatively smooth outer surface which is provided by the sheath. Furthermore, the outer sheath protects the insert made from a foamed polysaccharide material from environmental exposures, such as humidity, abrasion, etc. It is particularly preferred that the plate-like insert is loosely disposed inside the sheath.

In a further embodiment, the protective packaging product comprises at least a first section, a second section, and a third section, the first section and the second section being adjacent to each other and the second section and the third section being adjacent to each other, the sections being essentially flat and being separated from an adjacent section by a respective bend, a bend angle - at least in the use state of the protective packaging product - being preferably approx. 90°. This embodiment is particularly preferred in combination with the previously mentioned outer sheath. It is particularly well suited to form a shock absorbing inner lining for a shipping container.

In a further embodiment, the stacked corrugated layers comprise a squeeze line at the location of the bend. Such a squeeze line eases to form the bend and allows to reduce the radius of curvature of the bend.

In a further embodiment, the protective packaging product is formed by 3 to 5 layers, preferably by 4 layers. These values have proven to provide a very good relationship between the amount of material needed to form the protective packaging product, the cushioning properties of the protective packaging product, and its ability to comprise the at least one bend.

In a further embodiment, the protective packaging product comprises a bend having a bending angle of approx. 360°. Or, in other words: the protective packaging product is ring-shaped and, as such, is particularly well suited to fill the void space between objects to be shipped or between objects and shipping container.

In a further embodiment to this, the protective packaging product comprises 2 to 4 layers. These values have proven to provide a very good relationship between the amount of material needed to form the protective packaging product, the cushioning properties of the protective packaging product, and its ability to comprise the 360° bend.

The invention also relates to a plurality of the above-mentioned protective packaging products, wherein all protective packaging products of the plurality have the same width. This helps to reduce or even eliminate scrap or waste, respectively.

The invention also relates to a method for manufacturing the protective packaging product of any of the preceding claims, the method comprising the following steps: providing a continuous flat web of a plurality of stacked layers, the layers being corrugated layers having a multitude of corrugations and comprising a foamed polysaccharide material, the layers being parallel to each other and being adhered to an adjacent layer at a multitude of locations by an adhesive, essentially all corrugations of the corrugated layers being essentially parallel to each other, a corrugation axes of the corrugations being essentially transverse to a length direction of the web; separating a desired length of material along a separation line from the continuous web, the separation line being essentially parallel to the corrugations; bending the separated length of material about at least one bend, a bending axis of the bend being parallel to the corrugations. This manufacturing method allows to continuously manufacture protective packaging products with individually sized lengths, all having the same width. In a further embodiment, the method comprises the following additional steps: inserting the separated but still unbent length of material in a sheath preferably made of paper and preferably being tubular, the paper sheath being slightly longer than the separated length of material; closing the sheath at its open edge or edges, to build a composite protective packaging product; bending the composite protective packaging product about at least one bend, a bending axis of the bend being parallel to the corrugations, a bend angle being preferably approx. 90°. It is particularly preferred to loosely dispose the insert inside the paper sheath.

In a further embodiment of the method, the stacked layers are squeezed at the location of the bend prior to the bending step.

The invention also relates to a stock material for providing a protective packaging product, the stock material comprising a continuous flat web which is rolled into a supply roll of material, the web comprising a plurality of stacked layers, the layers being corrugated layers having a multitude of corrugations and comprising a foamed polysaccharide material, the layers being parallel to each other and being adhered to an adjacent layer at a multitude of locations by an adhesive, essentially all corrugations of the corrugated layers being essentially parallel to each other and being parallel to a middle axis of the supply roll. Such a stock material is lightweight and can be easily transported from a material stock to a usage location.

The continuous flat web of a plurality of stacked layers can be provided according to a method with the following steps: Providing a continuous flat web of at least one layer having a multitude of corrugations and comprising a foamed polysaccharide material, a corrugation axis of the corrugations being essentially parallel to a length direction of the web; separating a plurality of pieces of material of a same length from the continuous web, a separation line being transverse to the length direction of the web; placing a first plurality of the separated pieces of material one behind the other along a future web axis of the future continuous flat web (48) of the plurality (11) of stacked layers, a corrugation axis of the corrugations being essentially orthogonal to the future web axis; placing a second plurality of separated pieces of material one behind the other along the future web axis and above the first plurality of separated pieces of material, a corrugation axis of the corrugations being essentially orthogonal to the future web axis, wherein adjacent leading and trailing edges, respectively, of adjacent pieces of material of the first plurality are offset in the direction of the web axis relative to adjacent leading and trailing edges, respectively, of adjacent pieces of material of the second plurality; bonding the second plurality of separated pieces of material to the first plurality of separated pieces of material.

While providing the "starting material" in the form of a continuous flat web of a single layer is preferred, it is also possible that the starting material comprises more than one layer, e.g. two layers, which are laminated together, e.g. by starch bonding.

The invention will now be described with reference to the attached drawing. In the drawing shown
- Figure 1: a sectional view on an enlarged region of stacked corrugated layers made of a foamed polysaccharide material of the protective packaging product;
- Figure 2: a perspective view on an embodiment of a protective packaging product comprising an insert with a plurality of stacked layers and an outer sheath made of paper, before being bent;
- Figure 3: a perspective view on an embodiment of a protective packaging product forming a liner for an interior volume of a shipping container, comprising two bends;
- Figure 4: a schematic sectional view on a protective packaging product having three bends forming a liner for an interior volume of a shipping container or forming a wrap around an object to be protected;
- Figure 5: a side view on a ring-like protective packaging product having a 360° bend;
- Figure 6: a perspective view on a stock material in the form of a supply roll for providing a protective packaging product;
- Figure 7: a schematic representation of a method for manufacturing a flat web of a plurality of stacked layers; and
- Figure 8: a schematic side view of a flat web of a plurality of stacked layers.

In the following detailed description functionally equivalent elements and regions are designated with the same reference numerals. Furthermore, for the sake of clarity not in all Figures all possible reference numerals may be shown.

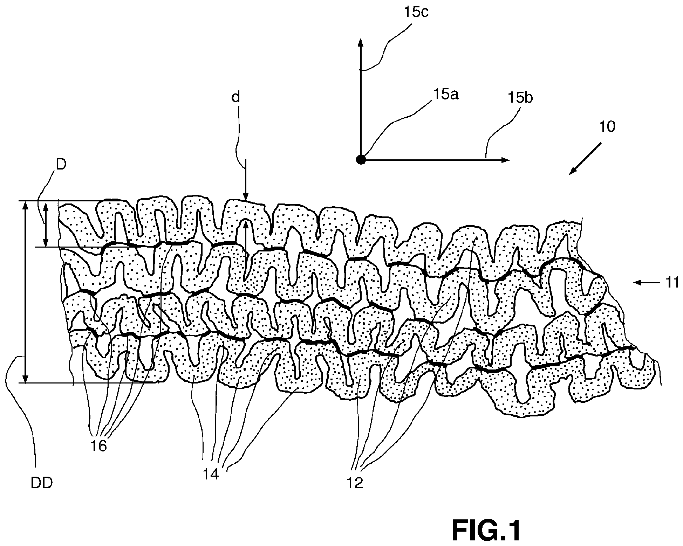

In Figure 1 a protective packaging product is designated generally with reference numeral 10. It comprises a plurality 11 of - in the present exemplary embodiment 4 -generally flat, corrugated, and stacked layers 12 made of a foamed polysaccharide material, in the present exemplary but preferred embodiment of a starch material. All layers 12 are essentially parallel and essentially and generally similar to each other. In other non-shown embodiments at least some of the stacked layers may be made of or at least comprise cellulose, lignin, pullulanes, alginates, chitin, chitosanes, natural rubbers, rosinic acid, dextrin or proteins such as gluten, zein, casein, collagen, gelatin, phospholipids, caseins and their derivatives such as for example esters or ethers.

The corrugated layers 12 may be manufactured using an extruder. The extruder may be fed with thermoplastic polysaccharide pellets and may be configured to extrude generally flat polysaccharide foam sheets usable to create the foamed polysaccharide layers in the protective packaging product. When such a polysaccharide foam sheet is extruded, the material expands when it leaves the die of the extruder, which may create a corrugating effect on the extruded foam sheet. This effect may be enhanced by using a die having a corrugated shape.

As can be seen from Figure 1, the layers 12 comprise a multitude of in the present exemplary embodiment wave-like corrugations 14 making essentially 180° U-turns and having essentially - that is more or less - parallel legs. The corrugations 14 of the corrugated layers 12 and the corrugated foamed polysaccharide material, respectively, are essentially parallel to each other. By consequence, a certain degree of flexibility of the protective packaging product 10 is achieved about a first axis 15a orthogonal to the plane of the drawing of Figure 1 and parallel to the corrugations 14 and their longitudinal axes, whereas the protective packaging product 10 is relatively stiff about the two axes 15b and 15c which are parallel to the plane of the drawing and orthogonal to the corrugations 14. The flexibility about the first axis 15a may be used, as will be shown hereinafter, to make the protective packaging product 10 comprise at least one bend, a bending axis of the bend being parallel to the corrugations 14 and to the axis 15a.

As can be seen, in the embodiment of Figure 1 the corrugations 14 and thus the corrugated layers 12 at least initially have a height D which is considerably greater than a thickness d of the non-corrugated layer. More specifically, a height D of the corrugations 14 is at least approx. twice the thickness d of the non-corrugated layer. By way of example, a thickness d of the non-corrugated material is in the range of approximately 2-3 mm. Moreover, a thickness D of a single corrugated layer is typically in the range of approximately 5-10 mm, more preferably in the range of 7 mm, and a thickness DD of 4 stacked layers is in the range of 25-35mm, preferably approximately 30 mm. By way of example, a single corrugated layer may have approximately 10-20 corrugations per 10 cm, preferably approx. 15 corrugations per 10 cm, seen in a direction transverse to the corrugations 14, that is along the axis 15b. It is preferred that the plurality 11 of stacked corrugated layers 12 is formed by approximately 4 layers 12, as shown in Figure 1.

Adjacent layers 12 are adhered to each other at a multitude of locations by means of a polysaccharide adhesive, in the present exemplary but preferred embodiment of a starch adhesive 16. In other non-shown embodiments, the adhesive may be made of or at least comprise cellulose, lignin, pullulanes, alginates, chitin, chitosanes, natural rubbers, rosinic acid, dextrin or proteins such as gluten, zein, casein, collagen, gelatin, phospholipids, caseins and their derivatives such as for example esters or ethers. The starch adhesive 16 may be obtained by dissolving a surface area of a starch layer 12, for example by applying water. The water may be applied by means of a water spray nozzle (not shown) are another type of application means.

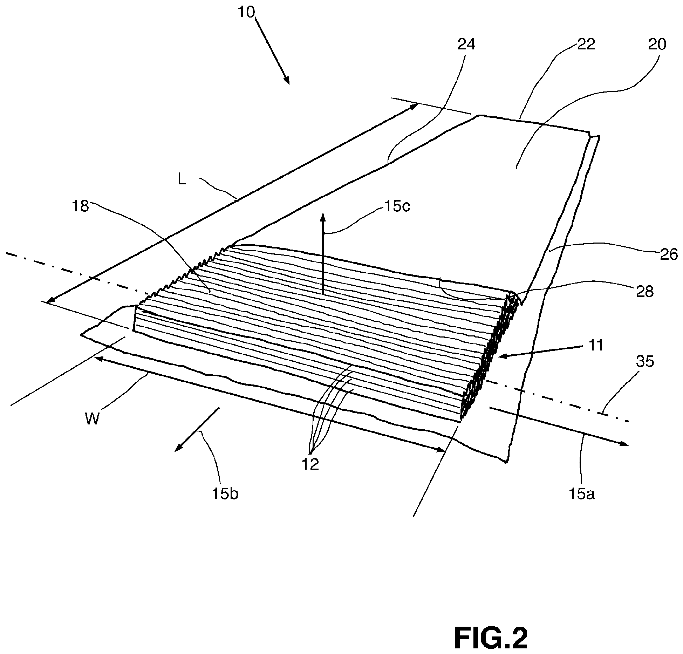

Figure 2 shows an embodiment of a protective packaging product 10 in a pre-use state comprising an insert 18 made of the plurality 11 of stacked layers 12 as shown in Figure 1 and additionally an outer sheath 20. In the present exemplary and preferred embodiment, the outer sheath 20 is made of paper. The protective packaging product 10 in Figure 2, however, in the shown pre-use state has an essentially flat configuration without any bend. That protective packaging product 10 of Figure 2 has a length extension L and a width extension W, the length extension L being considerably larger than the width extension W. The corrugations 14 are essentially parallel to the width extension W.

The outer sheath 20 comprises a closed end 22, two closed side edges 24 and 26, and an initially open end 28. The plurality 11 of stacked layers 12 forms the plate-like insert 18, which is inserted into the tubular outer sheath 20 through the initially open end 28. Figure 2 shows the protective packaging product 10 with the insert 18 not yet fully inserted into the outer sheath 20. The paper sheath 20 is slightly longer than a length of material of the plurality 11 of layers 12. After the insert 18 is fully inserted into the outer sheath 20, the initially open end 28 is closed, for example by means of an adhesive. By doing so, the plurality 11 of stacked layers 12 is fully enclosed by the outer sheath 20 made of paper.

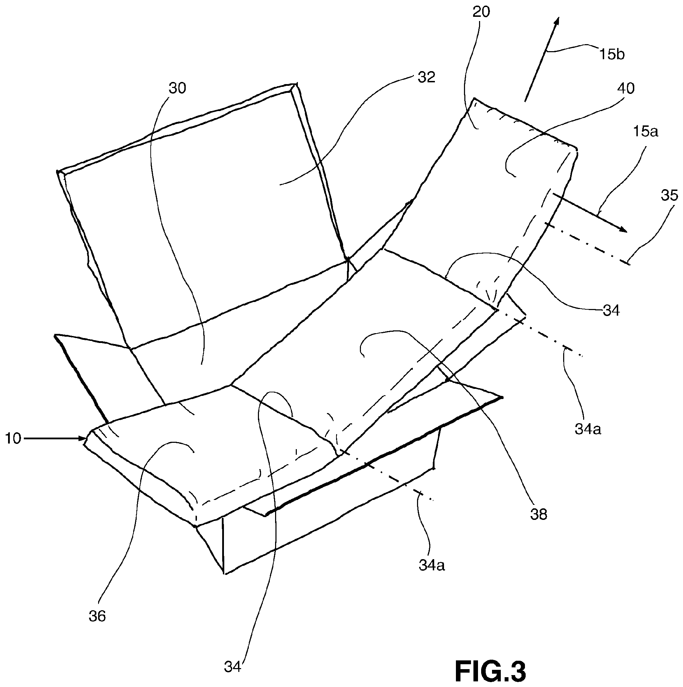

Figure 3 shows the protective packaging product 10 of Figure 2 during insertion into an inner volume 30 of a shipping container 32. In the configuration as shown in Figure 3, the protective packaging product 10 comprises two bends 34. As can be seen from Figure 3 in combination with Figure 2, a bending axis 34a (Figure 3) of the bends 34 is parallel to the corrugations 14 and a corrugation axis 35. In order to ease bending of the protective packaging product 10, a squeeze line (not shown) can be provided at the location of the bends 34. The squeeze line can be provided by locally applying a squeezing force at the location where the protective packaging product 10 shall be bent.

As can be seen from Figure 3, the protective packaging product 10 comprises a first rectangular section 36, a second rectangular section 38, and a third rectangular section 40. The first section 36 and the second circuit section 38 are adjacent to each other, and the second section 38 and the third section 40 are adjacent to each other. Each section 36, 38, and 40 is essentially flat and separated from an adjacent section by one of the mentioned bends 34. In the intermediate use state shown in Figure 3, the bend angles amount to approximately 20 to 30°. After the protective packaging product 10 is fully inserted into the inner volume 30 of the shipping container 32, the bend angles will amount to approximately 90°.

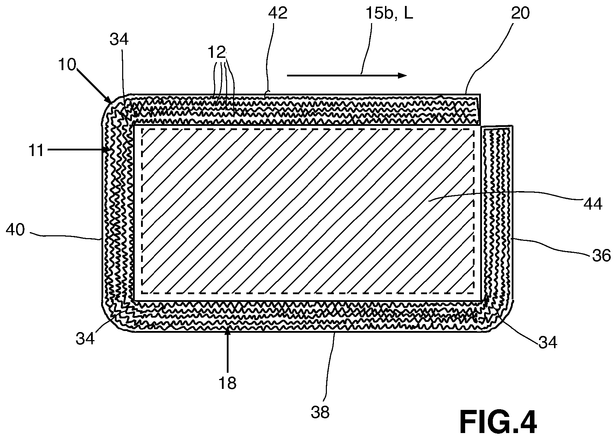

Figure 4 shows an alternative embodiment of a protective packaging product 10 comprising a plurality 11 of corrugated layers 12 made of a foamed polysaccharide material. The protective packaging product 10 again comprises an outer sheath 20 encapsulating the plurality 11 of corrugated layers 12. Again, the outer sheath 20 may be made of paper. In the embodiment of Figure 4, the protective packaging product 10 comprises three bends 34, the bend angles of each bend 34 amounting to approximately 90°. Through the bends 34, 4 sections 36, 38, 40, and 42 are provided, adjacent sections being separated by the mentioned bends 34. Sections 36 and 40 have the same length extension, and sections 38 and 42 have the same length extensions. Thus, the protective packaging product 10 forms a rectangular and essentially closed wrap, which might be used as a liner in the inner volume 30 of the shipping container 32 of Figure 3, and/or may be used to wrap around an object 44 to be protected by the protective packaging product 10.

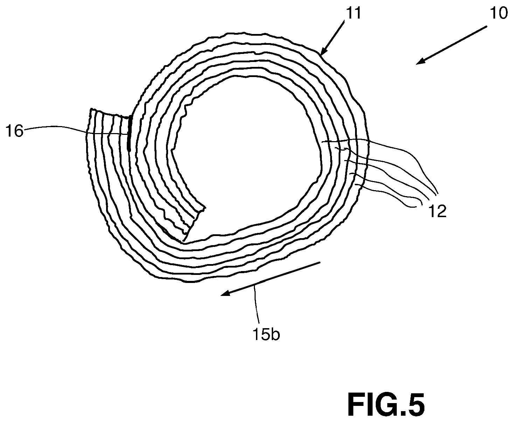

Figure 5 shows another alternative embodiment of a protective packaging product 10 comprising a plurality 11 of corrugated layers 12 made of a foamed polysaccharide material. The protective packaging product 10 of Figure 5 comprises or, in the present exemplary embodiment, essentially consists of a bend 34 having a bending angle of approximately 360° or even more. This leads to a protective packaging product 10 in the form of a ring or roll. An adhesive 16 can be used to secure an end of the plurality 11 of stacked corrugated layers 12. Such a protective packaging product 10 can be used, by way of example, in order to fill a void between objects to be shipped or between objects and a wall of a shipping container32.

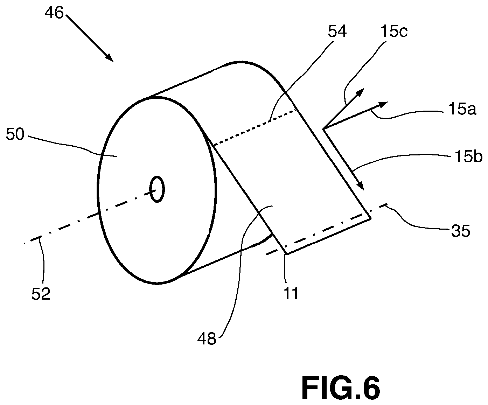

In order to manufacture the above-mentioned protective packaging products 10, a stock material 46 may be used, as can be seen from Figure 6. Such a stock material 46 may comprise a continuous flat web 48 which is rolled into a supply roll 50 of material. The web 48 comprises the above-mentioned plurality 11 of stacked corrugated layers 12, the layers 12 having a multitude of corrugations 14 and comprising a foamed polysaccharide material, e.g. starch, as shown for example in Figure 1. Essentially all corrugations of the corrugated layers 12 are essentially parallel to each other and are parallel to a middle axis 52 of the supply roll 50.

The stock material 46 of Figure 6 may, by way of example, be used to manufacture the protective packaging product 10 of Figures 2/3 or Figure 4, respectively. For example, a desired length of material can be separated from the continuous web 48, a separation line 54 being parallel to the corrugations 14. Then the separated length of material is loosely inserted into the tubular paper sheath 20, the paper sheath 20 being slightly longer than the separated length of material. Thereafter, the paper sheath 20 is closed at its open end 28, to build the composite protective packaging product of Figures 2/3 or Figure 4, respectively. Finally, the composite protective packaging product 10 is bent in order to provide the bends 34 as shown in Figures 3 and 4, respectively.

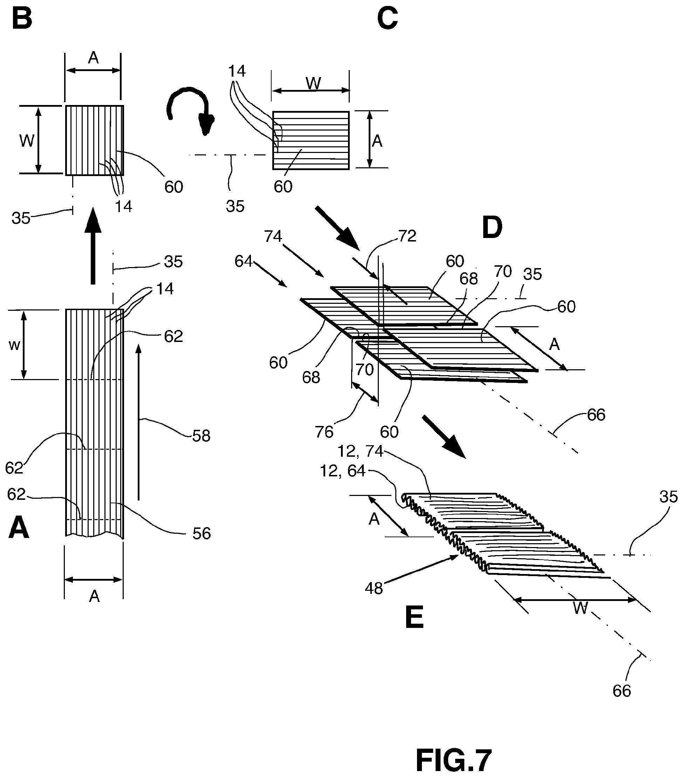

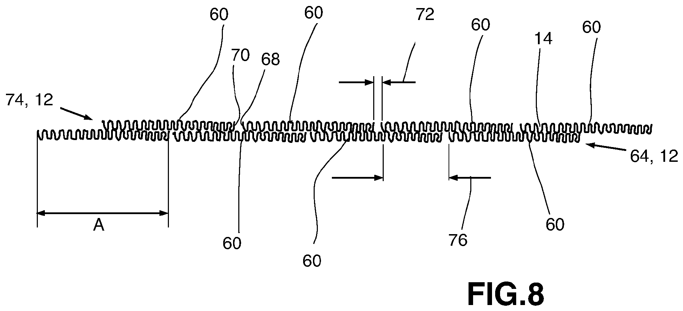

Figures 7 and 8 serve to explain a method for manufacturing a flat web-shaped "endless" material, from which the articles of Figures 1-6 can in turn be manufactured, such as the web-shaped material 48 presented in the form of the supply roll 50 of Figure 6. As can be seen from area A of Figure 7, a web-shaped "endless" starting material 56 is initially provided, which in the present exemplary embodiment consists of a single layer that has a multitude of corrugations 14. This web-shaped starting material 56 is made of a foamed polysaccharide material, preferably of starch. It has a width A. An axis 35 of the corrugations 14 runs essentially parallel to a longitudinal direction 58 of the web-shaped starting material 56.

A multitude of material pieces 60 are separated from the web-shaped starting material 56, all of which have the same length W. A typical value for W may be in the range of 200-400 mm, preferably in the range of 300 mm. A separating line 62 runs transversely to the longitudinal direction 58 of the web-shaped starting material 56. An exemplary material piece 60 is shown in area B of Figure 7. The separated pieces of material 60 are now turned by 90°. This produces a multitude of identical material pieces 60, now with a width W and a length A, as shown in area C of Figure 7. The corrugation axis 35 of the corrugations 14 now runs transversely to the length A.

Now a first plurality 64 of material pieces 60 is arranged one behind the other in the direction of a future web axis 66 of the future continuous flat web material 48 to be produced, with the corrugation axes 35 again being aligned essentially orthogonally to the future web axis 66, as shown in area D of Figure 7. A small gap 72 may be present between a leading edge 68 of one material piece 60 and a trailing edge 70 of an adjacent material piece 60. However, this is not mandatory. Instead, the leading edge 68 and the trailing edge 70 may also abut one another.

After that, a second plurality 74 of material pieces 60 is arranged one behind the other and on the first plurality 64, again in the direction of the future web axis 66 of the future continuous flat web material 48 to be produced, with the corrugation axes 35 again being aligned essentially orthogonally to the future web axis 66. A small gap 72 may also be present between a leading edge 68 of a material piece 60 and a trailing edge 70, adjacent to the former, of an adjacent material piece 60 in the material pieces 60 of the second plurality 74. However, this is also not mandatory. Instead, the leading edge 68 and the trailing edge 70 of the material pieces 60 of this second plurality 74 can also abut against each other.

However, it is important that those areas in which the leading edges 68 and the trailing edges 70 of the material pieces 60 of the first plurality 64 are adjacent to each other relative to those areas in which the leading edges 68 and the trailing edges 70 of the material pieces 60 of the second plurality 74 are adjacent to each other, are arranged offset relative to each other in the direction of the future web axis 66. This offset bears the reference sign 76 in area D of Figure 7.

Before the material pieces 60 of the second plurality 74 are arranged on the material pieces 60 of the first plurality 64, a bonding agent is typically applied or generated, for example, by simply spraying water onto the material pieces 60 of the first plurality 64.

When the material pieces 60 of the second plurality 64 are now placed on the material pieces 60 of the first plurality 64, the material pieces 60 of the first plurality 64 are quasi "automatically" adhesively bonded or glued to the material pieces 60 of the second plurality 74.

In this way, a continuous flat web-like material 48 is formed, consisting of two stacked and corrugated layers 12, as can be seen from area E of Figure 7. If more than two layers 12 are desired, a third, fourth, etc. plurality of material pieces 60 can be applied in accordance with the method described above.

The dimensions A, 72 and 76 described above can be clearly seen in Figure 8.

## Claims

1. A protective packaging product (10), comprising a plurality (11) of stacked layers (12), the layers (12) being corrugated layers (12) having a multitude of corrugations (14) and comprising a foamed polysaccharide material, the layers (12) being parallel to each other and being adhered to an adjacent layer (12) at a multitude of locations, essentially all corrugations (14) of the corrugated layers (12) being essentially parallel to each other, **characterized in that** the protective packaging product (10) in a use state comprises at least one bend (34), a bending axis (34a) of the bend (34) being parallel to the corrugations (14).

2. The protective packaging product (10) of claim 1, wherein the polysaccharide material comprises at least one material of the following group: cellulose, starch, lignin, pullulanes, alginates, chitin, chitosanes, natural rubbers, rosinic acid, dextrin or proteins such as gluten, zein, casein, collagen, gelatin, phospholipids, caseins and their derivatives such as for example esters or ethers.

3. The protective packaging product (10) of at least one of the preceding claims, wherein it comprises an outer sheath (20) preferably made of paper, the plurality (11) of stacked layers (12) forming a plate-like insert (18) which is a whole disposed inside the sheath (20).

4. The protective packaging product (10) of at least one of the preceding claims, wherein it comprises at least a first section (36), a second section (38) and preferably a third section (40), the first section (36) and the second section (38) being adjacent to each other and the second section (38) and the third section (40) being adjacent to each other, the sections (36-40) being essentially flat and being separated from an adjacent section (36-40) by a respective bend (34), a bend angle being preferably approx. 90°.

5. The protective packaging product (10) of at least one of the preceding claims, wherein the stacked layers (12) comprise a squeeze line at the location of the bend (34).

6. The protective packaging (10) product of at least one of the preceding claims, wherein it comprises 3-6 layers (12), preferably 4 layers (12).

7. The protective packaging product (10) of at least one of the preceding claims, wherein it comprises a bend (34) having a bending angle of approx. 360°.

8. The protective packaging product (10) of claim 6, wherein it comprises 2-4 layers (12).

9. A plurality of protective packaging products (10) of at least one of the preceding claims, wherein all protective packaging products (10) of the plurality have the same width (W).

10. A method for manufacturing the protective packaging product (10) of any of the preceding claims, the method comprising the following steps:
- providing a continuous flat web (48) of a plurality (11) of stacked layers (12), the layers (12) being corrugated layers (12) having a multitude of corrugations (14) and comprising a foamed polysaccharide material, the layers (12) being parallel to each other and being adhered to an adjacent layer at a multitude of locations, essentially all corrugations (14) of the corrugated layers (12) being essentially parallel to each other, a corrugation axis (35) of the corrugations (14) being essentially transverse to a length direction (15b) of the web (48);
- separating a desired length of material from the continuous web (48), a separation line (54) being parallel to the corrugations (14);
- bending the separated length of material about at least one bend (34), a bending axis (34a) of the bend being parallel to the corrugations (14).

11. The method of claim 10, wherein it comprises the following additional steps:
- inserting the separated but still unbent length of material in a sheath (20) preferably made of paper, the sheath (20) being slightly longer than the separated length of material;
- closing the sheath (20) at its open edge (28) or edges, to build a composite protective packaging product (10);
- bending the composite protective packaging product (10) about at least one bend (34), a bending axis (34a) of the bend (34) being parallel to the corrugations (14), a bend angle being preferably approx. 90°.

12. The method of at least one of the preceding claims 10-11, wherein the stacked layers (12) are squeezed at the location of the bend (34) prior to the bending step.

13. Stock material (46) for providing a protective packaging product (10), the stock material (46) comprising a continuous flat web (48) which is rolled into a supply roll (50) of material, the web (48) comprising a plurality (11) of stacked layers (12), the layers (12) being corrugated layers (12) having a multitude of corrugations (14) and comprising a foamed polysaccharide material, the layers (12) being parallel to each other and being adhered to an adjacent layer (12) at a multitude of locations, essentially all corrugations (14) of the corrugated layers (12) being essentially parallel to each other and being parallel to a middle axis (52) of the supply roll (50).

14. A method for manufacturing the continuous flat web (48) of the plurality (11) of stacked layers (12) of at least one of claims 10-13, the method comprising the following steps:
a) Providing a continuous flat web (56) of at least one layer having a multitude of corrugations (14) and comprising a foamed polysaccharide material, a corrugation axis (35) of the corrugations (14) being essentially parallel to a length direction (58) of the web (56);
b) separating a plurality of pieces (60) of material of a same length (W) from the continuous web (56), a separation line (62) being transverse to the length direction (58) of the web (56);
c) placing a first plurality (64) of the separated pieces (60) of material one behind the other along a future web axis (66) of the future continuous flat web (48) of the plurality (11) of stacked layers (12), a corrugation axis (35) of the corrugations (14) being essentially orthogonal to the future web axis (66);
d) placing a second plurality (74) of separated pieces (60) of material one behind the other along the future web axis (66) and on the first plurality (64) of separated pieces (60) of material, a corrugation axis (35) of the corrugations (14) being essentially orthogonal to the future web axis (66), wherein adjacent leading edges (68) and trailing edges (70), respectively, of adjacent pieces (60) of material of the first plurality (64) are offset (76) in the direction of the web axis (66) relative to adjacent leading edge (68) and trailing edges (70), respectively, of adjacent pieces (60) of material of the second plurality (74);
e) bonding the second plurality (74) of separated pieces (60) of material to the first plurality (64) of separated pieces (60) of material.

15. The method of claim 14, wherein step a) comprises providing a continuous flat web (56) of at least two layers having a multitude of corrugations (14) and comprising a foamed polysaccharide material, a corrugation axis (35) of the corrugations (14) being essentially parallel to a length direction (58) of the web (56).
